# EUROPEAN PATENT APPLICATION

(11) **EP 2 028 398 A1**
(43) Date of publication of application: **25.02.2009**
(21) Application number: 08251453.0
(22) Date of filing: 18.04.2008
(51) Int. Cl.: F16J 9/14, F16J 15/32

(54) **Sealing Rings**

(30) Priority: 23.08.2007 GB 0716406
(71) Applicant: CROSS MANUFACTURING COMPANY (1938) LIMITED, Combe Down, Bath, Avon BA2 5RR (GB)
(72) Inventor: Crudington, Peter Francis of Monklea, Freshford Nr. Bath, BA2 7TY (GB)
(74) Representative: Dunlop, Brian Kenneth Charles

(57) **Abstract**

This invention relates to sealing rings for sealing between relatively moveable parts of an engine. A sealing ring is typically located in the groove (11) of a piston (12) to seal between the piston (12) and the cylinder wall (13). In a typical embodiment one end (18) of the ring in (10) is formed with a projecting tongue (19), whilst the other end (20) has a groove (21). In use, the tongue (19), lies within the groove (20) and the length of the tongue (19) and groove (21) are selected so that a part of the tongue (19) will remain within the groove (21) throughout any design thermal expansions or contraction of the ring (10).

## Description

This invention relates to sealing rings for sealing between relatively moveable parts of an engine.

In the majority of cases, sealing rings are essentially in the form of a C which is effectively closed in use by the bringing together, leaving a small gap of the free ends of the C, although in some turbine arrangements the ends may be turned over in opposite senses so that they can hook together, this is usually to ease assembly.

Rings are typically used in gas turbines, steam turbines and other turbo machinery as seals between non-rotating hardware, rings allow for transient motion of mating parts in radial and axial directions. The motion may be due to thermal transients or a mis-match in the coefficients of thermal expansion between the two stators.

Particularly in the field of gas turbines designs are arising in which at least one face of the groove, in which the sealing ring will sit, is open, for example the face may be castellated. In this situation it is known for an end to pass through the gap in this face with the result that the ring can become progressively "unscrewed" from the groove.

From one aspect the invention consists in the sealing ring for sealing between relatively moveable parts of an engine, the ring comprising an open C - body having opposed ends including respective formations engageable to complete the ring categorized in that the formations are shaped to overlap or engage to allow relative sliding sealing engagement over a range of operating temperatures.

It is particularly preferred that one formation is in the form of a tongue and the other is in the form of a groove and both formations extend generally circumferentially. The relative lengths of the tongue and groove are selected to provide the extent of sealing engagement mentioned above.

The formation having the tongue may further include a radially offset circumferentially extending wall along at least part of the tongue for limiting or preventing radial leakage.

The,tongue may have an enlarged head and the groove may have a restrictive mouth, whereby the head, and hence the tongue, can be held captive against circumferential withdrawal from the groove. In this case the axial dimension of the groove is sufficiently large to allow the head to pass into the groove so that the two ends can be clipped together.

The ring may be an out springing ring or an in springing ring.

The invention includes an engine having a groove in a part for receiving a sealing ring wherein a part of at least one of the groove walls is incomplete and the groove contains a sealing ring as previously defined.
Although the invention has been defined above it is to be understood that it includes any inventive combination of the features set out above or in the following description.

The invention may be performed in various ways and specific embodiments will now be described, by way of example, with reference to the accompanying drawings, in which:
Figure 1 is systematic longitudinal section illustrating a ring disposed within a piston;
Figure 2 is the equivalent drawing showing a stator/stator arrangement in the turbine;
Figures 3(a) and 3(b) illustrate a particular form of turbine with Figure 3b showing the view in the direction of the arrow b;
Figures 4(a) and 4(b) are respectively a side view and a plan view of the first embodiment of the sealing ring;
Figure 5 is the side view of a second embodiment, whilst Figures 6 and 7 show respective plans views of an out spring version of the Figure 5 ring and an in springing one;
Figures 8(a) and 8(b) are side views and plan views of a third embodiment;
Figures 9(a) to 9(c) show different tongue head configurations for use in the embodiment of Figure 8;
Figures 10 and 11 are respective plan and side views of a further embodiment; Figures 12(a) and 12(b) are side views and plan views of the embodiment of Figure 10 in its assembled arrangement; and
Figures 13 and 14 illustrate a variation on the arrangement illustrated in Figure 10.

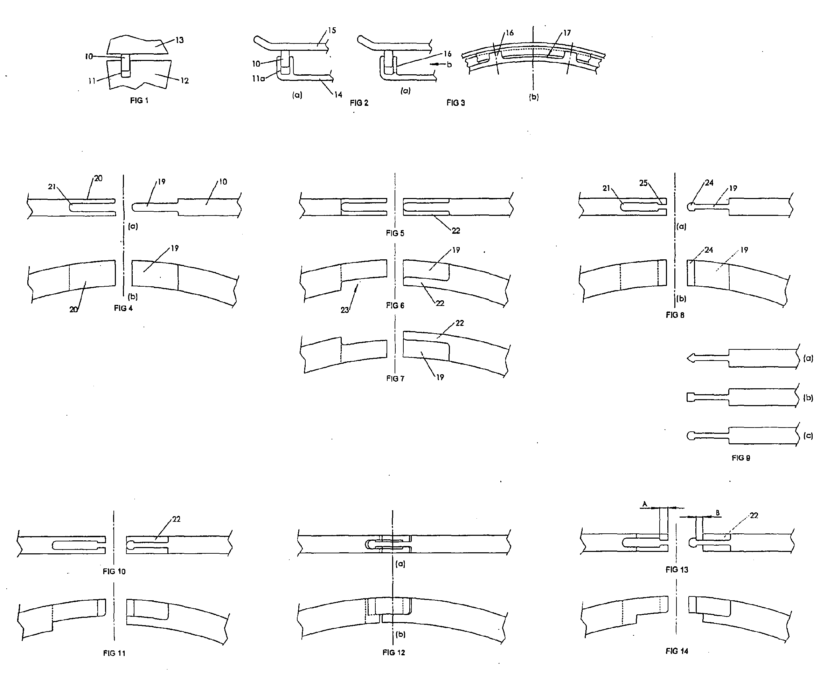

For clarity the views shown in Figures 4, 5, 6, 7, 8, 10, 11, 13 & 14 all show arrangement with the gap separated, figure 12 shows how the gap would look once the ring is installed.

In Figure 1 illustrates a sealing ring 10 is located in the groove 11 in a piston 12 to seal between the piston 12 and a cylinder wall 13. It will be noted that the sealing ring is of the out springing type. Figure 2 again shows a sealing ring 10, this time located in a groove 11 (a) in the stator 14 of a gas turbine. Ring 10 seals against another stator 15. Figures 3(a) and 3(b) illustrate a similar arrangement to Figure 2, except one of the walls 16 which defined the groove 11 (a) is castellated leaving spaces 17, which give rise to the particular problems mentioned above.

In Figures 4(a) and 4(b) the free ends of the ring 10 are illustrated. It will be seen that one end, 18, is formed with a projecting tongue 19, whilst the other end, 20, has a groove 21. In use, the tongue 19 lies within the groove 20 and the length of the tongue 19 and groove 21 are selected so that a part of the tongue 19 will remain within the groove 21 throughout any design thermal expansions or contractions of the ring 10.

Figure 5 shows a similar arrangement, but with the addition of a radial wall 22 for limiting radial leakage. As can be seen in Figures 6 and 7 the end 20 is cut away at 23 to accommodate the wall 22.

Figure 8 shows a further embodiment in which the tongue 19 has an enlarged head 24 and the groove 21 has a restricted mouth 25. It will readily be appreciated that the head 24 can be introduced into the groove 22 laterally, but can then not be withdrawn through the mouth. Figure 9 illustrates possible alternate head constructions. This arrangement greatly aids assembly of the parts in "blind holes" as the ends are latched together the maximum free diameter of the ring is greatly reduced and the parts can be assembled without the use of compression bands or similar devices.

Figures 10 and 11 show a similar arrangement but including a radial wall 22' to reduce leakage through the gap once installed. Figure 12 shows an assembled version of the out springing ring shown in Figures 13 and 14, which are similar to Figures 10 and 11, but here the wall 22' is reduced in length to aid manufacture. As long as the length A is greater than the length B the sealing efficiency given by the radial wall is not reduced.

## Claims

1. A sealing ring for sealing between relatively movable parts of an engine, the ring comprising an open C-shaped body having opposed ends including respective formations engageable to complete the ring **characterized in that** the formations are shaped to engage to allow relative sliding sealing engagement over the range of operating temperatures.

2. A ring as claimed in claim 1 wherein one formation is in the form of a tongue and the other is in the form of a groove and both formations extend generally circumferentially.

3. A ring as claimed in claim 2 wherein the formation having the tongue further includes a radially offset circumferentially extending wall along at least part of the tongue for limiting or preventing radial leakage.

4. A ring as claimed in claim 1 or claim 2 wherein the tongue has an enlarged head and the groove a restricted mouth, whereby the head, and hence the tongue, can be held captive against circumferential withdrawal in the groove.

5. A ring as claimed in claim 1 wherein it is one of an out springing ring or an in springing ring.

6. An engine having a groove in a part receiving a sealing ring wherein a part of at least one of the groove walls is incomplete and a sealing ring as claimed in claims 1 - 5.
